# EUROPEAN PATENT APPLICATION

(11) **EP 3 012 824 A1**
(43) Date of publication of application: **27.04.2016**
(21) Application number: 15182111.3
(22) Date of filing: 24.08.2015
(51) Int. Cl.: G09G 3/20, G06F 1/32, H04N 21/4223, H04N 21/442, H04S 7/00

(54) **DISPLAY APPARATUS AND DISPLAY METHOD THEREOF**

(30) Priority: 22.10.2014 KR 20140143612
(71) Applicant: Samsung Electronics Co., Ltd., Gyeonggi-do 16677 (KR)
(72) Inventor: JUNG, Sang-hyun, Gyeonggi-do (KR); JUNG, Choon-sik, Gyeonggi-do (KR); YANG, Deok-jin, Gyeonggi-do (KR)
(74) Representative: Walaski, Jan Filip

(57) **Abstract**

A display apparatus and method thereof are provided. The display apparatus includes a bendable display, and a controller configured to control the display to be bent to a preset angle based on a number of users of the display apparatus.

## Description

The present invention relates to a display technology, and more particularly, to a display apparatus and method which are capable of automatically changing viewing conditions according to the number of users.

Due to the development of various image display apparatuses, a technology for changing the setup of a display apparatus in consideration of viewing conditions of a user has been suggested. For example, a technology for changing sound or video effects according to a viewing distance of the user has been previously suggested. As another example, related display apparatuses provide a manual function capable of performing an operation for improving luminance of an image. For example, in response to a place in which the user watches the image being too light the luminance may be reduced through a manual operation of the user, and likewise, in response to the place being slightly dark, the luminance may be increased by the user.

However, a display apparatus such as a television (TV) is big enough that a plurality of users may simultaneously watch an image that is being provided therefrom. In this example, the number of viewers that are watching the display apparatus may change. Accordingly, because the number of viewers may change, it would be beneficial to provide optimized viewing conditions according to the number of viewers. However, the related display apparatus is not able to provide a technology for changing the viewing conditions of the display apparatus by considering the number of viewers.

One or more exemplary embodiments relate to a display apparatus which changes viewing conditions thereof by considering the number of viewers. For example, the display apparatus may change video conditions, audio conditions, physical conditions, and the like, of the display apparatus based on the number of viewers watching or estimated to be watching a display apparatus.

According to an aspect of an exemplary embodiment, there is provided a display apparatus including a bendable display and a controller configured to control the display to be bent to a preset angle according to the number of users of the display apparatus.

The controller may control the display to be bent to a maximum angle in response to the number of users being one.

The controller may control the display to decrease the angle at which the display is bent in response to the number of users being increased.

The controller may control the display to be flat in response to the number of users being equal to or larger than a preset number.

The display apparatus may further include a signal processor. In response to a volume adjustment input being received, the controller may control the signal processor to output sound in which volume is capable of being adjusted as the number of users is adjusted.

The display apparatus may further include a speaker. The controller may adjust a sound output direction of the speaker according to the number of users.

In response to the number of users being one, the controller may adjust the sound output direction of the speaker to be directed toward a location of the user.

The display apparatus may further include a location detector configured to detect a location of the user.

The speaker may include a first sub speaker and a second sub speaker. In response to the number of users being two, the controller may adjust a sound output direction of the first sub speaker to be directed toward a location of a first user, and adjust a sound output direction of the second sub speaker to be directed toward a location of a second user.

The display apparatus may further include an interface configured to receive an input indicating the number of users.

The controller may control the display to display a message on a screen inquiring whether or not to use a function for adjusting a viewing circumstance of the display apparatus according to the number of users.

According to an aspect of an exemplary embodiment, provided is a display method of a display apparatus, the display method including displaying an image, and controlling a display of the display apparatus displaying the image to be bent to a preset angle according to a number of users of the display apparatus.

The controlling of the display of the display apparatus may include controlling the display to be bent to a maximum angle in response to the number of users being one.

The controlling of the display of the display apparatus may include controlling the display to decrease the angle at which the display is bent in response to the number of users being increased.

The controlling of the display of the display apparatus may include controlling the display to be flat in response to the number of users being equal to or larger than a preset number.

The display method may further include, in response to a volume adjustment input being received, outputting sound in which a volume thereof is capable of being adjusted as the number of users is adjusted.

The display method may further include adjusting a sound output direction of a speaker of the display apparatus according to the number of users.

The adjusting of the sound output direction of the speaker may include, in response to the number of users being one, adjusting the sound output direction of the speaker to be directed toward a location of the user.

The speaker may include a first sub speaker and a second sub speaker. The adjusting of the sound output direction of the speaker may include, in response to the number of users being two, adjusting a sound output direction of the first sub speaker to be directed toward a location of a first user, and adjusting a sound output direction of the second sub speaker to be directed toward a location of a second user.

The display method may further include displaying a message on a screen inquiring whether or not to use a function for adjusting a viewing circumstance of the display apparatus according to the number of users.

According to various exemplary embodiments, provided are a display apparatus and a display method which are capable of changing viewing conditions of the display apparatus by considering the number of viewers watching the display apparatus.

Additional aspects and advantages of the exemplary embodiments are set forth in the detailed description, and will be obvious from the detailed description, or may be learned by practicing the exemplary embodiments.

The above and/or other aspects will be more apparent by describing in detail exemplary embodiments, with reference to the accompanying drawings, in which:
FIG. 1 is a block diagram illustrating a configuration of a display apparatus according to an exemplary embodiment;
FIG. 2 is a block diagram illustrating a configuration of a display apparatus according to another exemplary embodiment;
FIG. 3 is a diagram illustrating bending of a display apparatus according to an exemplary embodiment;
FIG. 4 is a diagram illustrating bending of a display apparatus according to another exemplary embodiment;
FIG. 5 is a diagram illustrating volume adjustment of a display apparatus according to an exemplary embodiment;
FIG. 6 is a diagram illustrating sound output direction adjustment according to an exemplary embodiment;
FIGS. 7 and 8 are diagrams illustrating sound output direction adjustments according to other exemplary embodiments;
FIGS. 9 and 10 are diagrams illustrating a message for inquiring whether to use an auto viewing circumstance adjustment function according to an exemplary embodiment;
FIG. 11 is a diagram illustrating a graphic user interface (GUI) that is displayed in response to an auto speaker direction adjustment function being selected, according to an exemplary embodiment;
FIG. 12 is a diagram illustrating a GUI representing a speaker direction adjustment menu according to an exemplary embodiment;
FIG. 13 is a diagram illustrating a GUI that is displayed in response to a menu item for speaker direction adjustment being selected according to an exemplary embodiment;
FIG. 14 is a diagram illustrating a screen for manually inputting the number of viewers according to an exemplary embodiment; and
FIGS. 15 and 16 are flowcharts illustrating display methods according to various exemplary embodiments.

Hereinafter, the exemplary embodiments are described in greater detail with reference to the accompanying drawings.

In the following description, unless otherwise described, the same reference numerals are used for the same elements when they are depicted in different drawings. The matters defined in the description, such as detailed construction and elements, are provided to assist in a comprehensive understanding of the exemplary embodiments. Thus, it is understood that the exemplary embodiments can be carried out without those specifically defined matters. Also, functions or elements known in the related art are not described in detail because they would obscure the exemplary embodiments with unnecessary detail.

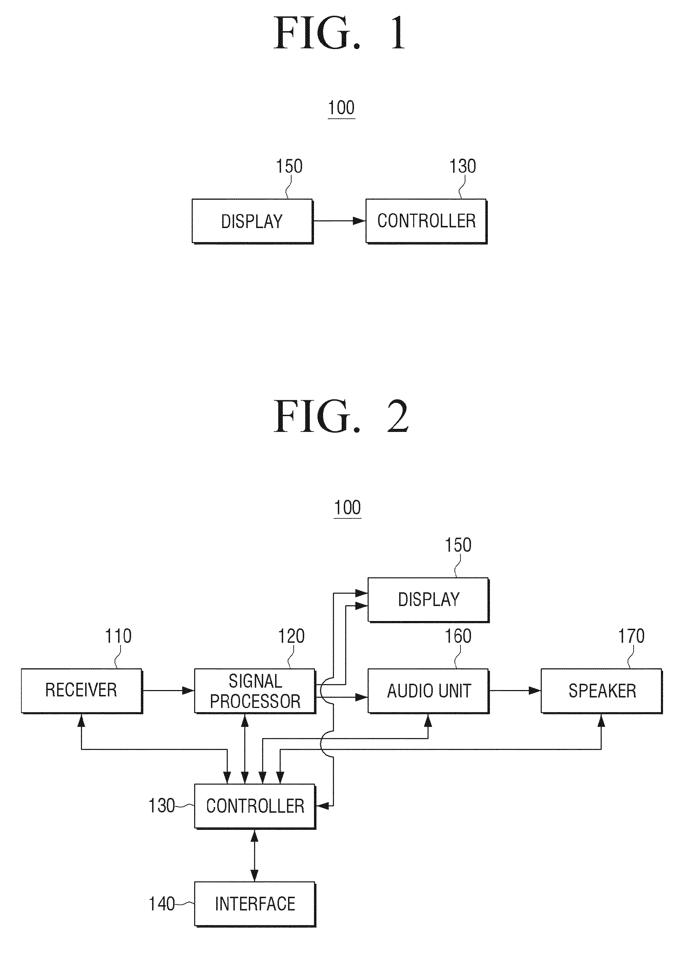

FIG. 1 is a block diagram illustrating a configuration of a display apparatus 100 according to an exemplary embodiment.

According to various embodiments, the display apparatus 100 may include one or more displays, and may be an apparatus configured to execute an application or display content. For example, the display apparatus 100 may be a digital TV, a tablet personal computer (PC), a portable multimedia player (PMP), a personal digital assistant (PDA), a smart phone, a portable phone, a digital photo frame, digital signage, a kiosk, an appliance, and the like. Referring to FIG. 1, the display apparatus 100 includes a display 150 and a controller 130.

The display 150 is a component configured to display an object. According to various exemplary embodiments, the display 150 may have a flexible or bendable characteristic. That is, the display apparatus 100 may be implemented as a flexible display apparatus.

For example, the flexible display apparatus may maintain display characteristics of a flat display apparatus and may also be wrappable, bendable, foldable, rollable, etc., like paper. Therefore, the flexible display apparatus may be fabricated on a flexible substrate. Also, as an example, the display 150 may include a substrate (not shown), a driver (not shown), a display panel (not shown), and a protection layer (not shown).

The substrate may be implemented with a plastic substrate, for example, a polymer film, which is deformable by an external pressure. The plastic substrate may include a barrier coating which is processed on both sides of a base film. For example, the base film may be implemented with various resins such as polyimide (PI), polycarbonate (PC), polyethyleneterephtalate (PET), polyethersulfone (PES), polythylenenaphthalate (PEN), fiber reinforced plastic (FRP), and the like. The barrier coating may be coated on sides of the base film that face each other, and an organic film or an inorganic film may be used to maintain flexibility. Also, a material that has a flexible characteristic such as thin glass or metal foil may be used as the substrate in addition to a plastic substrate.

The driver functions to drive the display panel. For example, the driver may apply a driving voltage to a plurality of pixels of the display panel, and may be implemented with an amorphous silicon (a-Si) thin film transistor (TFT), a low temperature polysilicon (LTPS) TFT, an organic TFT (OTFT), and the like. Also, the driver may be implemented in various forms according to an implementation type of the display panel. For example, the display panel may be a type that is formed of an organic light emitter including a plurality of pixels and electrode layers covering both sides of the organic emitter. In this example, the driver may further include a plurality of transistors corresponding to the plurality of pixels of the display panel. Here, a controller that is described later may apply an electrical signal to a gate of each transistor, and allow the pixel coupled to the corresponding transistor to be emitted. Accordingly, an image may be displayed.

The display panel may be implemented with, for example, an electroluminance (EL) display, an electrophoretic display (EPD), an electrochromic display (ECD), a liquid crystal display (LCD), an active matrix LCD (AMLCD), a plasma display panel (PDP), or the like in addition to an organic light emitting diode. Also, an LCD typically uses a separate backlight because the LC itself cannot emit light. In some examples, an LCD does not include backlight and instead uses ambient light. Therefore, in an example in which an LCD display panel is used without a backlight, a condition such as an outdoor circumstance may be satisfied.

The protection layer functions to protect the display panel. For example, the protection layer may include a material such as zirconium oxide (ZrO), cerium oxide (CeO2), thorium oxide (ThO2), and the like. The protection layer may be fabricated in the form of a transparent film, and may cover a part of or the entire surface of the display panel.

As another example, the display 150 may be implemented as an electronic paper. Electronic paper has a display that has characteristics of general ink being applied to paper, and is different from a general flat panel display in that reflected light is used. That is, e-paper relies on the scattering and absorption of light just like ink on real paper. Also, electronic paper may change figures and characters through electrophoresis using twist balls or capsules. For example, the electronic paper may be a type of electrophoretic display

In response to the display 150 being formed of a transparent material, the display apparatus 100 may be implemented with a bendable transparent display apparatus. As a non-limiting example, the substrate may be implemented with a transparent polymer material such as plastic, the driver may be implemented with a transparent transistor, and the display panel may be implemented with a transparent organic light emitting layer and a transparent electrode. Accordingly, the display 150 may have transparency through each of the layers and materials.

In the above example, the transparent transistor refers to a transistor that may be fabricated using a transparent material such as a transparent zinc oxide (ZnO), a transparent titanium oxide (TiO) other than an opaque silicon used to fabricate existing TFTs, and the like. Also, an indium tin oxide (ITO) or a new material such as graphene may be used as a transparent electrode. Graphene is a transparent material that has a honeycomb plane structure in which carbon atoms are bonded to each other. Also, the transparent organic light emitting layer may be implemented with various materials.

According to various exemplary embodiments, the flexible display apparatus may be bent by an external pressure causing the display apparatus to be deformed. The bending may include a normal bending, folding, and rolling. The normal bending refers to a state in which the display apparatus is bent. The folding refers to a state in which the display apparatus is folded. Here, the difference between folding and normal bending may be determined according to a degree of the bending. In response to the bending being performed to a certain bending angle or more, the bending may be defined as placing the flexible display apparatus in a folded state. As another example, in response to an amount of the bending being below the bending angle, the bending may be defined as normal folding.

The rolling refers to a state in which the flexible display apparatus is rolled. The rolling may also be determined based on the bending angle of the flexible display apparatus. For example, if the bending of the flexible display is sensed as a certain bending angle or more over a certain region, rolling of the flexible display may be determined. On the other hand, if the bending of the flexible display is sensed below the bending angle in a relatively smaller region, folding of the flexible display may be determined. As another example, whether bending, folding, rolling, and the like, are performed may be determined based on a radius of curvature instead of the bending angle.

It should also be appreciated that the definition of the various types of deformation are merely for purposes of example, and the deformation forms may be differently defined based on a kind, size, weight, characteristic, and the like of the display apparatus. For example, in response to the display apparatus being bendable such that surfaces thereof are capable of contacting each other, folding may be determined to occur or defined as the state in which two surfaces of one side of the display apparatus are in contact with each other by the bending. As another example, rolling may be defined as the state in which a front side and a rear side of the display apparatus are in contact with each other due to the bending.

For clarity, various types of bending and other bending types are collectively called bending in exemplary embodiments.

The display 150 may have a bendable characteristic as described above, and display various objects or various types of content. Also, there is no limitation for the types of content that may be displayed. For example, the content may include pre-manufactured content such as video on demand (VoD) content, premium VoD content, broadcast content, Internet content, a local file, external content connected through a digital living network alliance (DLNA) network, and the like. However, the content is not limited thereto, and the content may include recorded broadcast content, real-time broadcast content, and the like.

The controller 130 may control an overall operation of the display apparatus 100. For example, the controller 130 may control the display unit 150 to be bent to a preset angle according to the number of users. The controller 130 may apply a force or create a signal causing another component to apply a force to the display 150 based on the number of users, and deform the shape of the display 150. In this example, the deformation may include any one of the above-described normal bending, folding, and rolling, and the bending angle may be variously changed.

The controller 130 may include a hardware configuration which may include, for example, a micro processing unit (MPU), a central processing unit (CPU), a cache memory, a data bus, and the like, and a software configuration such as an operating system, an application for performing a specific purpose, and the like. A control command for each component for operation of the display apparatus 100 may be read from a memory according to a system clock. Accordingly, the controller 130 may generate an electric signal according to the read control command, and operate the hardware components.

FIG. 2 is a block diagram illustrating a configuration of the above-described display apparatus 100 according to another exemplary embodiment.

Referring to FIG. 2, the display apparatus 100 includes a receiver 110, a signal processor 120, a controller 130, an interface 140, a display 150, an audio unit 160, and a speaker 170. An example of the display 150 has been described with respect to the description of FIG. 1, and thus an overlapping description thereof is omitted.

The receiver 110 may receive content and information related to the content from an external apparatus. For example, the receiver 110 may receive broadcast program content from a broadcasting station using a broadcast network or receive content from a web server using the Internet. The receiver 110 may receive content from various recording medium reproducing apparatuses which may be provided in the display apparatus 100 or which may be coupled to the display apparatus 100. The recording medium reproducing apparatus may reproduce content recorded in various types of recording media such as a compact disc (CD), a digital versatile disc (DVD), a hard disc, a blu-ray disc, a memory card, a universal serial bus (USB) memory, and the like.

In some examples, the receiver 110 may include a tuner or a demodulator. Accordingly, the receiver 110 may be configured to receive and demodulate content being from a broadcasting station.

For example, the tuner may select a radio frequency (RF) broadcast signal corresponding to a selected channel from among RF broadcast signals received through an antenna, and convert the selected RF broadcast signal to an intermediate frequency (IF) signal or a baseband video or audio signal. In response to the selected RF broadcast signal being a digital broadcast signal, the tuner may convert the selected RF broadcast signal to a digital IF signal. As another example, in response to the selected RF broadcasting signal being an analog broadcast signal, the tuner may convert the selected RF broadcast signal to an analog base band video or an audio signal (composite video banking sync and sound intermediate frequency (CVBS SIF)). The output signal of the tuner may be input to the signal processor 120. Also, the tuner may receive the RF broadcast signal of a single carrier according to an advanced television system committee (ATSC) scheme or the RF broadcast signal of a plurality of carriers according to a digital video broadcasting (DVB) scheme.

The demodulator (not shown) may receive the digital IF signal converted through the tuner and perform a demodulation operation on the received digital IF signal. In response to the digital IF signal output from the tuner being a signal according to the ATSC scheme, the demodulator may perform an eight-vestigal side band (8-VSB) demodulation. In response to the digital IF signal output from the tuner being a signal according to the DVB scheme, the demodulator may perform a coded orthogonal frequency division multiplexing (COFDM) demodulation. Also, the demodulator may perform channel decoding such as trellis decoding, deinterleaving, or Reed-Solomon decoding.

In response to the channel decoding being performed, a stream signal (transport stream (TS)) may be output from the demodulator. The stream signal may include a video signal, an audio signal, and a data signal which are multiplexed together. For example, the stream signal may be a MPEG-2 TS in which a video signal of an MPEG-2 standard, an audio signal of a Dolby AC-3 standard, and the like, are multiplexed. The stream signal output from the demodulator is input to the signal processor 120.

As another example, the receiver 110 may receive content from an external server such as a web server. For example, the receiver 110 may be implemented with or may include a network interface card. The display apparatus 100 and the web server may comply with the transmission control protocol/Internet protocol (TCP/IP) for information transmission on Internet.

The receiver 110 may also receive content from various external apparatuses other than Internet. For example, the receiver 110 may include a CVBS terminal, a component terminal, an S-video terminal (analog), a digital visual interface (DVI) terminal, a high definition multimedia interface (HDMI) terminal, RGB terminals, a D-subminiature (D-SUB) terminal, an IEEE1394 terminal, a Sony and Philips digital interface (SPDIF) terminal, a liquid HD terminal, a USB terminal, and the like.

The receiver 110 may include various wireless communication modules. For example, the receiver 110 may include a short-range communication module such as a WIFI module, a Bluetooth module, an infrared data association (IrDA) module, a near field communication (NFC) module, a Zigbee module, a radio frequency Identification (RFID) module, an ultra wideband (UWB) module, and the like. The receiver 110 may be implemented with a third-generation (3G) mobile communication module such as wideband code division multiple access (WCDMA), high speed downlink packet access (HSDPA), high speed uplink packet access (HSUPA), high speed packet access (HSPA), a 4G mobile communication module such as mobile WiMAX, WiBro, a 4G long term evolution (LTE) module, and the like.

The receiver 110 may receive content from a set-top box. The set-top box may support bidirectional communication to support an IP TV.

The signal processor 120 may perform signal processing on video information and audio information included in content. In response to a stream signal being received, the signal processor 120 may perform demultiplexing on the stream signal and divide the stream into a video signal, an audio signal, and a data signal. The signal processor 120 may perform decoding on the demultiplexed video signal using a decoder. For example, the signal processor 120 may perform decoding on an MPEG-2 standard encoded video signal a using a MPEG-2 decoder, and the signal processor 120 may perform decoding on a H.264 standard video signal of a digital multimedia broadcasting (DMB) scheme or a DVB-H scheme using a H.264 decoder. Also, the signal processor 120 may perform processing on brightness, tint, hue, and the like, of the video signal.

The signal processor 120 may also perform signal processing on a demultiplexed audio signal. For example, the signal processor 120 may perform decoding on an encoded audio signal of a MPEG-2 standard using a MPEG-2 decoder, and the signal processor 120 may perform decoding on an encoded audio signal of a MPEG-4 bit sliced arithmetic coding (BSAC) standard of a terrestrial DMB scheme using a MPEG-4 decoder. The signal processor 120 may also perform decoding on an encoded audio signal of a MPEG-2 advanced audio codec (AAC) standard of a DMB scheme or DVB-H scheme using an AAC decoder. In addition, the signal processor 120 may adjust a base, treble, volume, and the like of the audio signal. In this example, the signal-processed audio signal may be provided to the audio unit 160.

Further, the signal processor 120 may perform data processing on a demultiplexed data signal. For example, the signal processor 120 may perform decoding on encoded data, and the encoded data may include, for example, an electronic program guide (EPG) indicating information for programs broadcast in each channel. The EPG may be an ATSC-Program and System Information Protocol (TSC-PSIP) information in an ATSC scheme, and the EPG may include a DVB-service information (DVB-SI) information in a DVB scheme.

The interface 140 may receive a user command. For example, the interface 140 may include at least one physical button or a touch panel. In response to a button being pressed by a user or an object on the touch panel being touched by a user, a control command corresponding to the button or touched object may be generated, and the display apparatus 100 may be operated according to the generated control command.

On the other hand, the interface 140 may include the above-described short-range communication module, and may receive a control signal that is transmitted from a remote control device through the short-range communication module. In response to a button of a remote controller or the like being pressed by the user, a control command is generated by the remote controller, and the interface 140 may receive the generated control command and transmit the received control command to the controller 130. In response to a touch panel or a motion sensor being included in the remote controller, the control command may be generated by the touch of the user or a motion of the remote controller.

The audio unit 160 may divide audio signals into a plurality of channels using a pulse width modulation (PWM) integrated circuit (IC), convert the divided audio signals to PWM signals, and switch the converted PWM signals to extract an audio signal of a first channel, an audio signal of a second channel, and the like. For example, the audio signals may be transmitted to the speaker 170.

The speaker 170 may output the received audio signals. For example, the speaker 170 may include one speaker or a plurality of speakers. As a non-limiting example, a three-channel audio speaker may include a left-front speaker, a center speaker, and a right-front speaker. The three-channel audio speaker may further include a sub woofer that may output an audio signal of a sub-woofer channel including a bass part. As another example, a 5.1 channel audio speaker may include a sub woofer, a left-rear speaker, a left-front speaker, a right-front speaker, a right-rear speaker, and a center speaker.

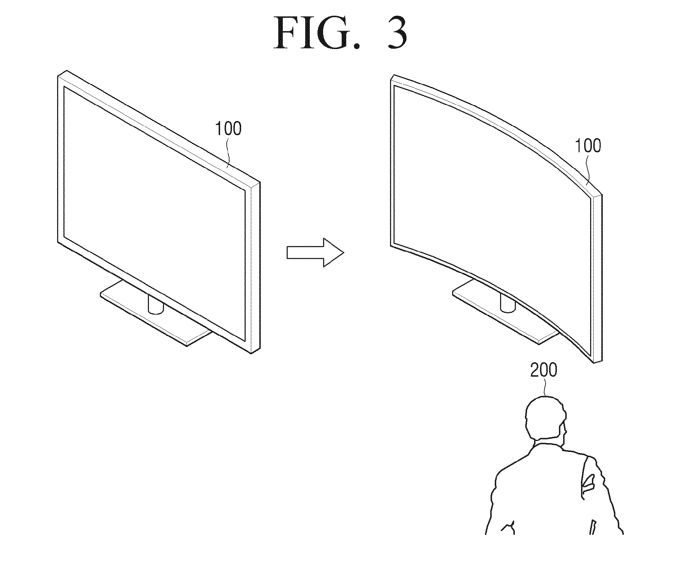

FIG. 3 is a diagram illustrating bending of a display apparatus according to an exemplary embodiment.

As described herein according to one or more exemplary embodiments, the controller 130 of the display apparatus 100 may control the display 150 to bend to a preset angle according to a number of users who are watching or who are present within a predetermined area of the display apparatus 100. That is, the controller 130 may cause the display 150 to be bent. For example, the display apparatus 100 may include a physical configuration which is configured to apply a force to the display 150 in a preset direction.

The skilled person will envisage many arrangements that can apply force in response to an applied signal, so as to change the curvature of a bendable sheet. For example, mechanical actuators may be used to push and pull a central portion of the sheet backwards and forwards, while holding the lateral sides of the sheet in a frame that prevents such movement, only allowing sideways movement with the changing curvature. Alternatively, pivoting mechanical arms may be used to engage with edges of the sheet to push the edges forwards and backwards. These arrangements are not limiting and many other arrangements would be apparent to one skilled in the art.

As illustrated in the example of FIG. 3, a user is watching the display apparatus 100 as shown in the right drawing, in response the display 150 may be bent. As a non-limiting example, the display apparatus 100 may be implemented so that the display 150 as well as the entire display apparatus 100 may be bent. As another example, only the display 150 including a screen may be bent. As another example, the display apparatus 100 may be implemented such that only a screen portion (i.e. a display panel) of the display 150 may be bent.

FIG. 3 illustrates an example in which the display 150 is bent. As described above, in response to the display 150 being bent based on a number of users, viewing distances from the display 150 to the user, for example, from regions of the screen of the bent display 150 to the user, may be similar to each other, and the viewing distance may be smaller in comparison to that of the flat display 150. Therefore, when the display 150 is ben the user may watch an image in a panorama form, and the user may feel a presence and an immersive sense. FIG. 3 illustrates an example of normal bending, but the technical idea of the inventive concept may also be applied to the above-described folding or rolling.

The controller 130 may control the display 150 to be bent to a preset angle according to a number of users as described above. For example, in response to the number of users being one, two, and three, the degrees of bending and the bending angles may be different from each other.

As an example, the controller 130 may control the display 150 to be bent to a maximum angle in response to the number of users being determined or estimated as one. In response to the number of users being one, the display 150 may be bent to the maximum angle so that the user may watch an image with a maximum immersive sense without interference from other people.

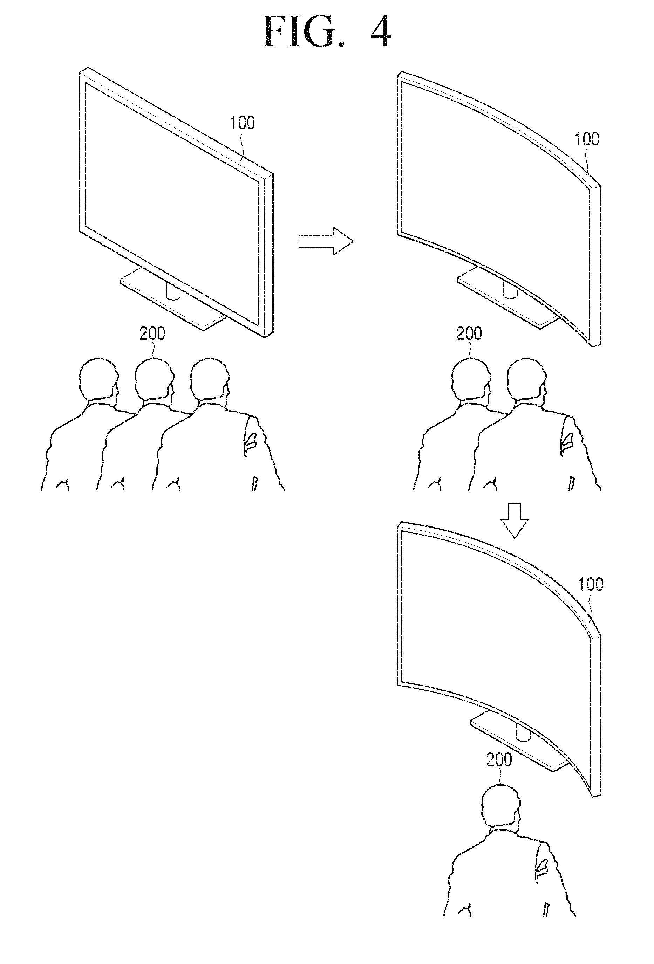

FIG. 4 is a diagram illustrating bending of a display apparatus according to another exemplary embodiment.

The controller 130 may control the display 150 to bend at a smaller angle as the number of users is increased. That is, the amount of bend of the display 150 may be inversely proportional to the number of users. For example, if there are a great number of users around the display, only part of the users may view or see straight in front of the display 150 unless the users are gathered at a specific location. Therefore, one or more of the users may not view straight in front of the display 150, and may not properly view or watch an image.

Referring to FIG. 4, the display 150 is not bent in response to the number of users being three, the display 150 is slightly bent in response to the number of users being two, and the display 150 is bent the most in response to the number of users being one. However, it should be appreciated that FIG. 4 is merely exemplary and other examples are within the scope. For example, the controller 130 may control the display 150 to be flat in response to the number of users being equal to or larger than a preset number because when the display apparatus is being simultaneously viewed by many users, most of the users will have a hard time viewing an entire area of the display 150 if the display 150 is bent.

Although not shown in FIG. 2, the display apparatus 100 may further include a location detection unit (not shown). In this example, the controller 130 of the display apparatus 100 may control the location detection unit to detect a viewing location of the user. Also, the location detection unit may include an image capturing unit. Accordingly, the display apparatus 100 may capture an image through the image capturing unit, analyze the captured image, distinguish at least one user from the image, and determine a viewing location of the at least one user. The controller 130 may control the display 150 to be bent by considering the number of users and the viewing location of each user. For example, the controller 130 may control the display 150 to be bent based on a viewing location direction of the user. For example, the controller 130 may determine that it is difficult for a user to completely view the display 150 when the display 150 is bent. In this example, the display apparatus 100 may be implemented so that it can rotate towards the user to enable the user to have a view that is straight in front of the display apparatus 100.

For example, in response to the user being located towards the left of a front center of the display apparatus 100, the display 150 may be bent, or at least one of the display 150 and the display apparatus 100 may be rotated so that a front of the display 150 of the display apparatus 100 is directed towards the user located on the left. As another example, in response to the user being located towards the right of the front center of the display apparatus 100, the display 150 may be bent, or at least one of the display 150 and the display apparatus 100 may be rotated so that a front of the display 150 of the display apparatus 100 is directed toward the user located toward the right.

The location detection unit may detect the viewing location of the user and also determine the number of users (i.e. the amount of users). The controller 130 may control the display 150 to be bent to a preset angle according to the determined number of users. For example, the controller 130 may determine the number of users through the location detection unit, and automatically control the display 150 to be bent to an angle, such as a small angle, as the number of users watching the display apparatus increases. Also, as another example, the display apparatus may determine the number of users through a separate detection unit other than the location detection unit. For example, the separate detection unit may include any one of an infrared sensor, an image sensor, an ultrasonic sensor, and the like.

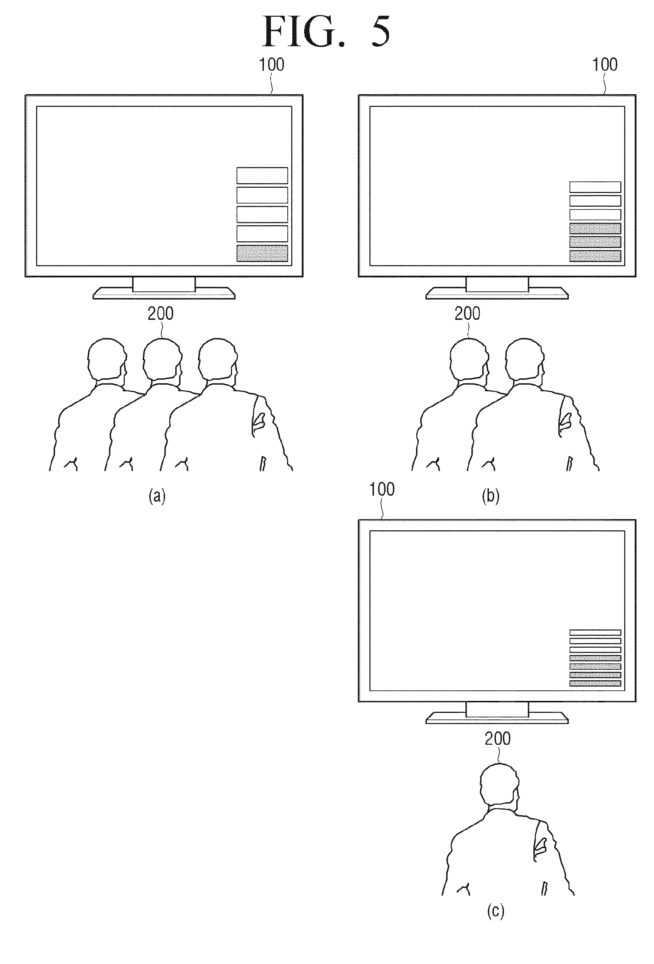

FIG. 5 is a diagram illustrating volume adjustment of a display apparatus according to an exemplary embodiment.

As described herein, the signal processor 120 may perform signal processing on an audio signal. In response to a volume adjustment input being received, the controller 130 may control the signal processor 120 or the speaker 170 to adjust a volume thereof according to the number of users. For example, in response to a volume adjustment input being received via a user input, the controller 130 may control the signal processor 120 or the speaker 170 to output sound in which the volume is finely adjusted as the number of users is reduced or in which the volume is finely increased as the number of users increases.

Referring to FIG. 5, a volume adjustment unit, or an amount of volume, may be set to be large in response to the number of users 200 being three (FIG. 5(a)). In this example, the volume adjustment unit refers to an incremental amount in which the volume can be increased or decreased. Accordingly, the granularity with which the volume may be controlled may be dynamically adjusted based on a number of viewers present around the display apparatus 100.

As another example, in response to the number of users 200 being two, the volume adjustment unit may be set to be slightly smaller (FIG. 5(b)), and in response to the number of users 200 being one, the volume adjustment unit may be set to be its smallest increment (FIG. 5(c)). Accordingly, in response to a button of a remote controller being pressed for volume-up or volume-down by the user 200, the volume adjustment unit may by dynamically adjusted and set so that the volume is heavily up or down in response to the number of users 200 being large, or the volume is slightly up or down in response to the number of users 200 being small. In an example in which the number of users is large, most of time, the users may stand farther away from the display apparatus 100 to watch the image together. In addition, the more users the more chance of background sound interrupting the sound of the image due to dialogues between the users. Accordingly, the volume may be adjusted more rapidly when more users are present. As another example, in response to the number of users being smaller, the users are typically closer to the display apparatus 100 to watch the image and background noise may be relatively quiet in comparison to when there are more users. Accordingly, the volume may be adjusted more finely when less users are present.

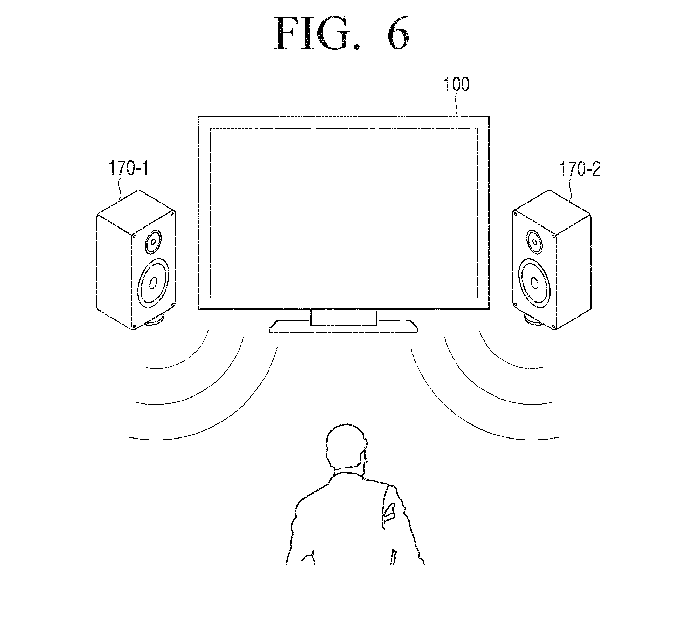

FIG. 6 is a diagram illustrating sound output direction adjustment according to an exemplary embodiment.

As described above, the display apparatus 100 may include the speaker 170. Here, a sound output direction of the speaker 170 may be adjusted according to a control of the controller 130. For example, the speaker 170 may include a physical component configured to rotate the speaker 170, for example, unidirectionally or bidirectionally. As a non-limiting example, the speaker 170 may be located at a position that is outside of the display apparatus 100 as illustrated in FIG. 6 or may be attached to a surface of the display apparatus 100. As another example, the speaker 170 may be formed on the surface of the display apparatus 100 and pass therethrough. In this example, in response to the speaker 170 being rotated, the speaker 170 may protrude outwardly largely or slightly from the display apparatus 100 according to a degree of rotation.

According to one or more exemplary embodiments, the controller 130 may adjust the sound output direction of the speaker 170 according to a number of users. For example, the controller 130 may determine a rotation direction and a degree of rotation according to a number of users and rotate the speaker 170 according to the determined rotation direction and degree of the rotation. For example, the controller 130 may detect a location of the user and rotate the speaker 170 so that the sound output direction of the speaker 170 is directed towards a detected viewing location direction of the user. For example, the display apparatus 100 may determine the viewing location of the user through the location detection unit as described above.

The controller 130 may adjust a sound output direction of the speaker 170 to be directed towards the location of the user in response to the number of users being one. In the example of FIG. 6, the speaker 170 includes a plurality of sub speakers 170-1 and 170-2. Accordingly, and the controller 130 may rotate the sub speakers 170-1 and 170-2 (even in different directions) so that sound output directions of the speakers 170-1 and 170-2 are directed to the viewing location direction of the user.

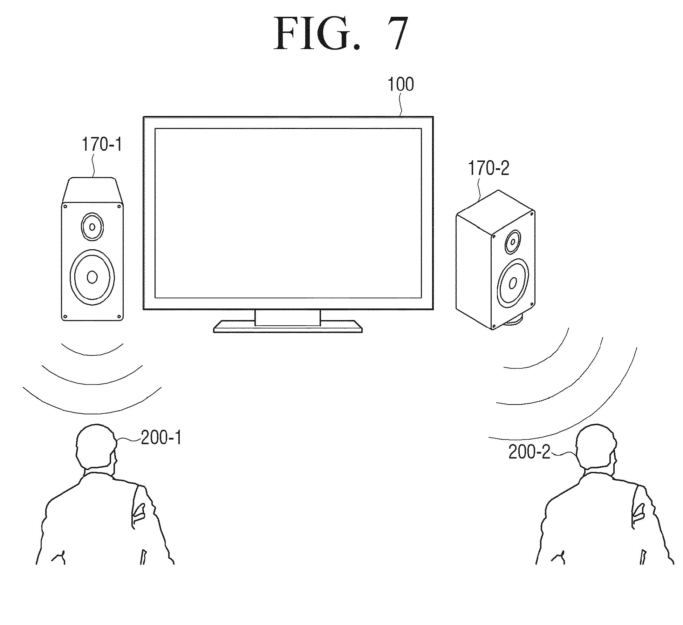

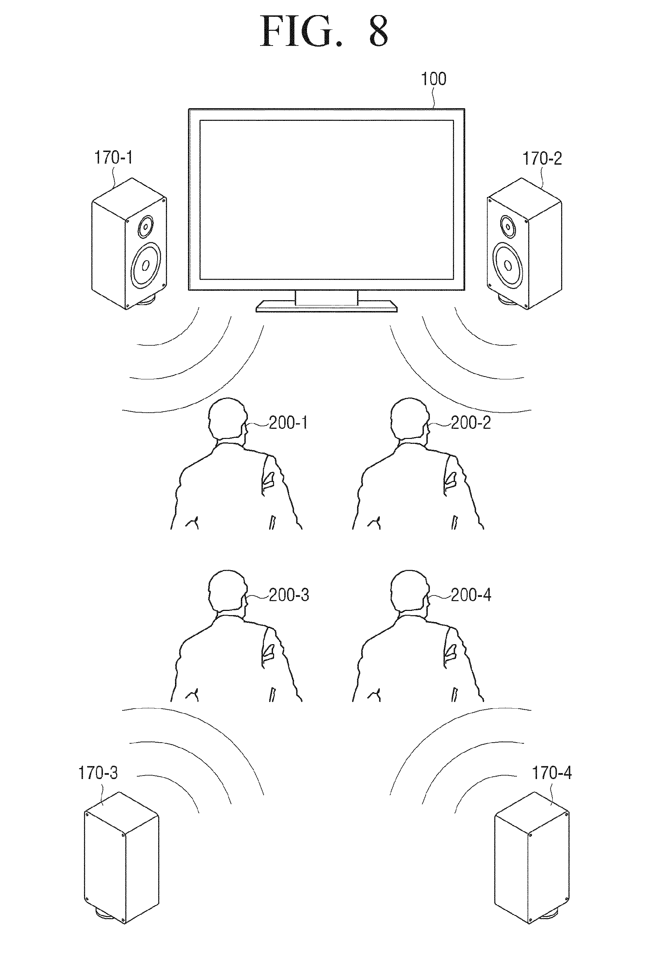

FIGS. 7 and 8 are diagrams illustrating sound output direction adjustment according to various other exemplary embodiments.

Referring to FIG. 7, the controller 130 may adjustment a sound output direction of a first sub speaker 170-1 to be directed towards a location of a first user 200-1 and adjust a sound output direction of a second sub speaker 170-2 to be directed towards a location of a second user 200-2 when the number of users is two. In the example of FIG. 7, the first sub speaker 170-1 is pointed at or rotated towards the first user 200-1 and the second sub speaker 170-2 is rotated to a direction of the second user 200-2.

As illustrated in FIG. 8, the controller 130 may adjust sound output directions of sub speakers 170-1, 170-2, 170-3, and 170-4 to be directed towards users 200-1, 200-2, 200-3, and 200-4, respectively, in response to a plurality of users being present.

As another example, when a plurality of speakers 170 are provided and a plurality of users are present, the controller 130 may control the plurality of speakers so that sound output directions of the plurality of speakers are located between the plurality of users. The sound output directions of the plurality of speakers may be locations that have a same distance from the plurality of users.

It should also be appreciated that the method of adjusting the sound output direction of the speaker to the location of the user is not limited to the above-described exemplary embodiments. As another example, sound output directions of partial sub speakers may be adjusted to a location of a user such as a user that is close thereto, and sound output directions of basic speakers (sub woofer, left-front speaker, and right-front speaker) may be fixed. In this example, a volume of the speaker of which the sound output direction is adjusted may be adjusted to be low, and volume of the basic speaker may be adjusted to be high. This may prevent sound degradation due to the sound output direction adjustment of the speaker.

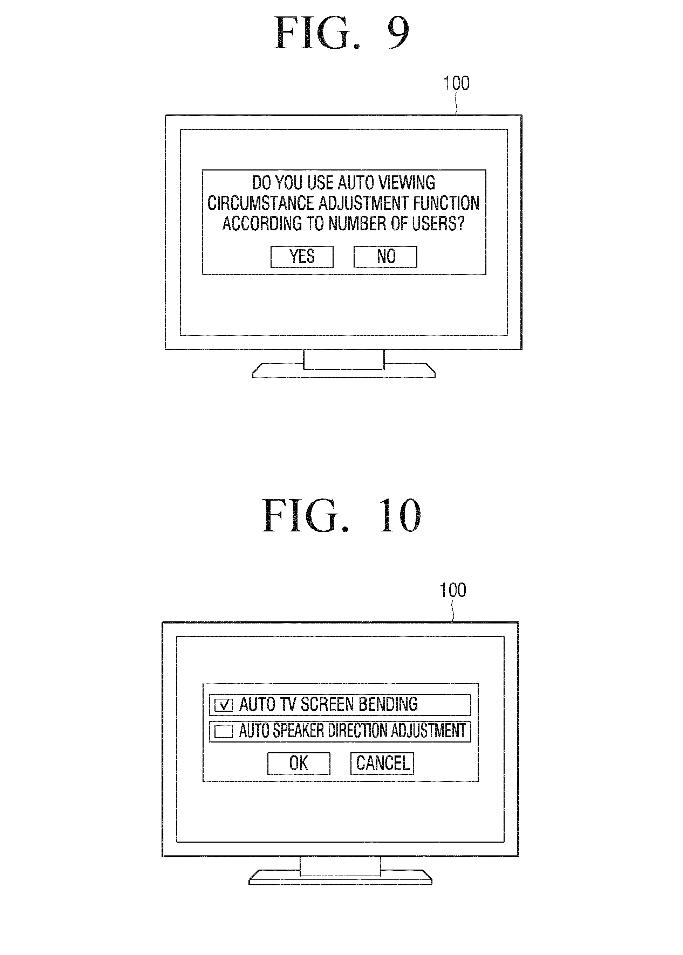

In some examples, the display apparatus 100 may include the interface 140 and may receive a user command through the interface 140. For example, the controller 130 may control the display 150 to output a message inquiring whether or not to use functions for bending the display 150, changing the volume adjustment unit, and adjusting the sound output direction of the speaker, which are functions of the display apparatus 100. Examples of a message output is illustrated in FIGS. 9 and 10.

In response to the speaker 170 being formed on a surface of the display apparatus 100 or being coupled to the display apparatus 100, the sound output direction of the speaker may be affected according to the bending of the display apparatus 100. In this example, the sound output direction of the speaker 170 may be adaptively adjusted according to a degree of the bending of the display apparatus and a bending direction of the display apparatus 100. For example, in response to the display apparatus 100 being bent, the sound output direction of the speaker 170 may be adjusted to be maintained as it is. As another example, in response to the display apparatus 100 being bent, the sound output direction of the speaker may be adjusted by considering the degree of bending and the bending direction as described above.

FIGS. 9 and 10 are diagrams illustrating messages for inquiring whether or not to use an auto viewing circumstance adjustment function according to various exemplary embodiments.

Referring to FIG. 9, the controller 130 may display a message inquiring whether or not to use the auto viewing circumstance adjustment function of the display apparatus 100. The user may respond to the message through the interface 140. In this example, the auto viewing circumstance adjustment function may include functions for bending of the display 150, changing the volume adjustment unit, and adjusting a sound output direction of the speaker according to a number of viewers.

The display apparatus 100 may support a manual mode which may adjust the sound output direction of the speaker using a remote controller that is controlled by the user. For example, in a case in which the auto viewing circumstance adjustment function is not used, the user may adjust the sound output direction of the speaker through a remote control device.

As illustrated in FIG. 10, the user may select a check box and determine whether or not to use the desired auto viewing circumstance adjustment function. However, as another example, the display apparatus 100 may be implemented to use the function through a menu item selection, a voice recognition function, or through gesture input. In the example of FIG. 10, the auto TV screen bending check box is selected.

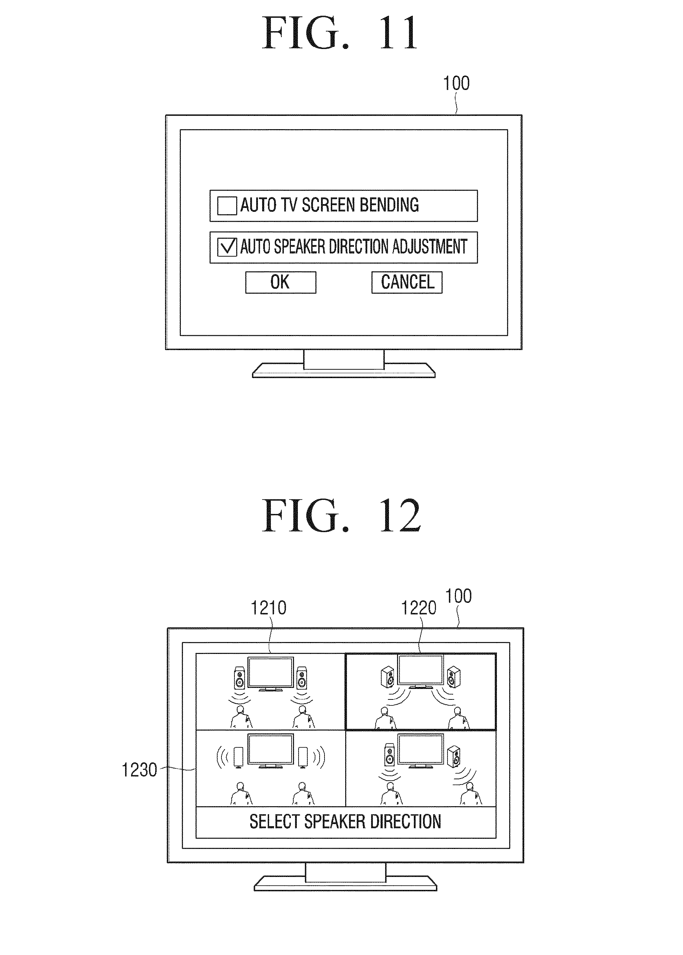

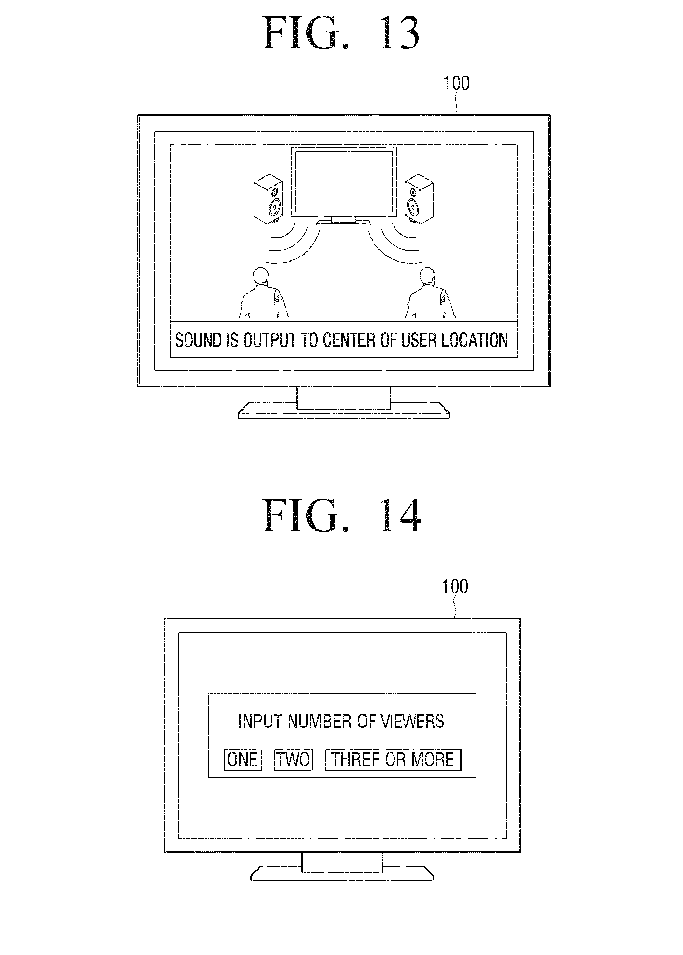

FIG. 11 is a diagram illustrating a graphic user interface (GUI) that is displayed in response to an auto speaker direction adjustment function being selected, FIG. 12 is a diagram illustrating a GUI indicating a speaker direction adjustment menu, and FIG. 13 is a diagram illustrating a GUI that is displayed in response to a menu item for adjusting a speaker direction being selected.

Referring to FIG. 11, a user may select a check box and select the auto speaker direction adjustment function. Referring to FIG. 12, a speaker direction adjustment menu may be displayed. In this example, a user menu for selecting the speaker direction may be displayed. In response to a plurality of users being present, the user menu may include a menu item 1210 which adjusts sound output directions of a plurality of speakers towards locations of the plurality of users, respectively, a menu item 1220 which adjusts the sound output directions of the plurality of speakers towards a direction that is located between the plurality of users, and a menu item 1230 which may be used to set the sound output directions of the plurality of speakers based on locations of the plurality of speakers. Also, the user may select the desired menu item through a remote controller. For example, in response to a menu item being selected by a user or the auto speaker direction adjustment function of FIG. 11 being selected by the user, the display apparatus 100 may adjust the speaker direction, and display information about the speaker direction adjustment on a screen as illustrated in the example of FIG. 13.

FIG. 14 is a diagram illustrating a screen for manually inputting the number of viewers according to an exemplary embodiment.

A user or viewer of the display apparatus 100 may manually input the number of viewers. For example, the user may input the number of viewers through the interface 140. As illustrated in FIG. 14, the user may directly input the number of viewers through the interface 140 or may perform an input for selecting one of the menu items for the number of viewers.

As another example, the display apparatus 100 may automatically check or otherwise determine the number of users instead of the above-described exemplary embodiment. For example, the display apparatus 100 may include an image capturing unit (not shown), and may capture images of people located in front of the display apparatus 100 through the image capturing unit. At this time, the controller 130 may analyze a captured image and distinguish the number of viewers from the image. Accordingly, the display apparatus 100 may perform the above-described operation according to the distinguished number of viewers analyzed by the controller 130.

For example, the display apparatus may include a receiver component which includes the image capturing unit. Here, the controller may determine the number of viewers as a number or the amount of people determined to be in front of the display apparatus based on an image captured by the image capturing unit. As another example, the controller may determine the number of viewers within a predetermined distance from the display apparatus as viewers watching the display apparatus, based on an image captured by the image capturing unit. Accordingly, the display apparatus may determine a number of users that are currently watching or viewing a display of the display apparatus, and adjust viewing conditions accordingly.

According to one or more exemplary embodiments, the display apparatus may receive an indication manually through a user interface indicating a number of users watching the display apparatus. As another example, the display apparatus may include an image capturing unit capable of capturing an image from an area in front of the display apparatus. Accordingly, the display apparatus may determine a number of users watching the display apparatus based on the captured image. For example, the display apparatus may include a processor that is capable of receiving the manual input of the number of users from the user interface, and that is capable of receiving and determining a number of users from the image captured by the image capturing unit. In some examples, the processor may be or may be included in the controller 130 described in the examples of FIGS. 1 and 2.

Hereinafter, example display methods of a display apparatus according to various exemplary embodiments are described.

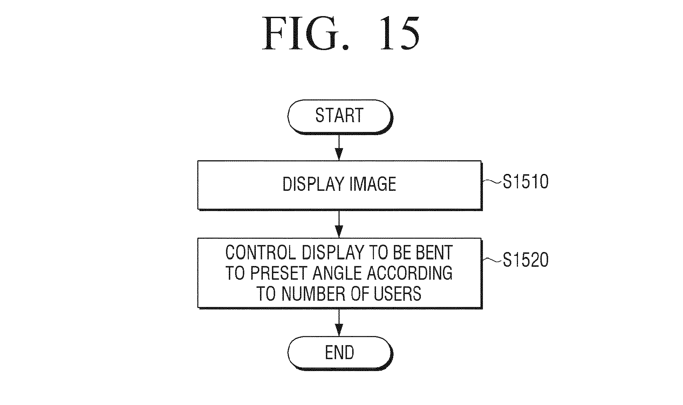

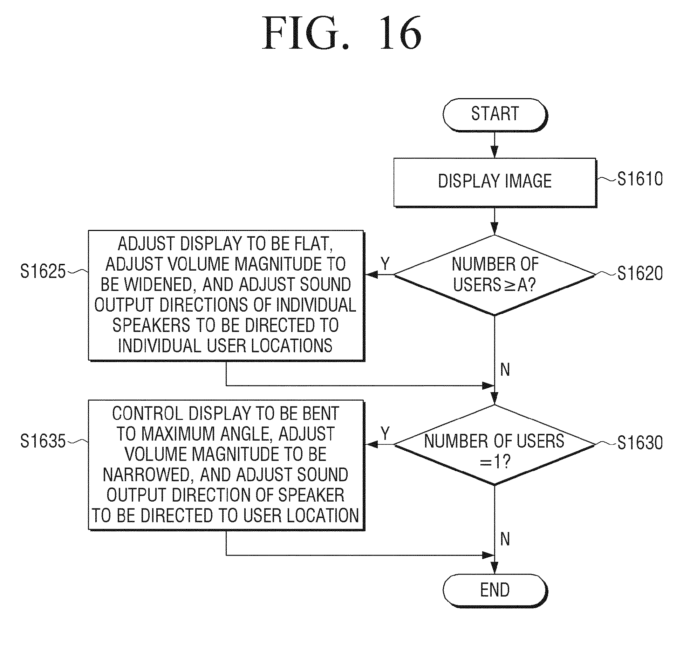

FIGS. 15 and 16 are flowcharts illustrating display methods of a display apparatus according to various exemplary embodiments.

Referring to FIG. 15, the display method includes displaying an image (S1510), and controlling a display of the display apparatus to be bent to a preset angle according to the number of users (S1520).

The controlling of the display of the display apparatus to bend may include bending the display to a maximum angle in response to the number of users being one. As another example, the controller of the display may include controlling the display to bend by a small angle in response to the number of users being increased. As another example, the controlling may include adjusting the display to be flat in response to the number of users being equal to or larger than a preset number.

The display method may further include outputting sound in which volume may be finely adjusted as the number of users is increased or reduced, and in response to a volume adjustment input being received. The display method may further include adjusting a sound output direction of a speaker of the display apparatus according to the number of users.

The adjusting of the sound output direction may include adjusting the sound output direction of the speaker to be directed toward a location of a user in response to the number of users being one. In some examples, the speaker may include a first sub speaker and a second sub speaker. In this example, the adjusting of the sound output direction may include adjusting a sound output direction of the first sub speaker to be directed toward a location of a first user and adjusting a sound output direction of the second sub speaker to be directed toward a location of a second user, in response to the number of users being two.

The display method may further include displaying a message on a screen asking whether or not to use a function for adjusting a viewing circumstance or viewing condition of the display apparatus according to the number of users.

Referring to FIG. 16, the display method according to another exemplary embodiment includes displaying an image (S1610), and adjusting a display of the display apparatus to be flat, adjusting a volume magnitude to be wider, and adjusting sound output directions of individual speakers to be directed towards locations of individual users (S1625), in response to determining or identifying that the number of users is equal to or larger than a preset number A (S1620-Y).

Also, in response to the number of users being one (S1630-Y), the display method includes allowing the display of the display apparatus to be bent to a maximum angle, adjusting the volume magnitude to be narrowed, and adjusting the sound output direction of the speaker to be directed toward a location of the user (S1635).

The above-described display methods according to various exemplary embodiments may be stored in a non-transitory computer-readable medium in a program form. The non-transitory computer-recordable medium is not a medium configured to temporarily store data such as a register, a cache, or a memory but an apparatus-readable medium configured to permanently or semi-permanently store data. For example, the non-transitory apparatus-readable medium may include a compact disc (CD), a digital versatile disc (DVD), a hard disc, a Blu-ray disc, a universal serial bus (USB), a memory card, or a read only memory (ROM).

The above-described display methods may be installed in a hardware integrated circuit (IC) chip in an embedded software form, and the hardware IC chip may be included as a partial component of the display apparatus 100.

The foregoing exemplary embodiments and advantages are described merely for purposes of example and are not to be construed as limiting the present inventive concept. The exemplary embodiments can be readily applied to other types of devices. Also, the description of the exemplary embodiments is intended to be illustrative only, and not to limit the scope of the invention as defined by the claims.

## Claims

1. A display apparatus comprising:
a bendable display; and
a controller configured to control the display to be bent to a preset angle based on the number of users of the display apparatus.

2. The display apparatus as claimed in claim 1, wherein the controller is configured to control the display to be bent to a maximum angle in response to the number of users being one.

3. The display apparatus as claimed in claim 1 or 2, wherein the controller is configured to control the display to decrease the angle at which the display is bent in response to the number of users being increased.

4. The display apparatus as claimed in any one of claims 1 to 3, wherein the controller is configured to control the display to be flat in response to the number of users being equal to or larger than a preset number.

5. The display apparatus as claimed in any one of the preceding claims, further comprising a signal processor,
wherein the controller is configured to control the signal processor to output sound in which a volume is capable of being adjusted as the number of users is adjusted, in response to a volume adjustment input being received.

6. The display apparatus as claimed in any one of the preceding claims, further comprising a speaker,
wherein the controller is configured to adjust a sound output direction of the speaker according to the number of users.

7. The display apparatus as claimed in any one of the preceding claims, further comprising a location detector configured to detect a location of the one or more users.

8. The display apparatus as claimed in claim 7, wherein, in response to the number of detected users being one, the controller is configured to adjust a sound output direction of a speaker of the display apparatus to be directed toward a detected location of the user.

9. The display apparatus as claimed in claim 7 or 8, wherein the speaker comprises a first sub speaker and a second sub speaker, and
the controller is configured to adjust a sound output direction of the first sub speaker to be directed toward a location of a first user, and adjust a sound output direction of the second sub speaker to be directed toward a location of a second user, in response to the number of users detected being two.

10. The display apparatus as claimed in any one of claims 7 to 9, wherein the controller is configured to control the display to be bent or rotated to the preset angle according to the detected location of the user.

11. The display apparatus as claimed in any one of claims 7 to 10, wherein, in response to a plurality of speakers being provided and a plurality of users being present, the controller is configured to control sound output directions of the plurality of speakers to be towards areas located between the plurality of users.

12. The display apparatus as claimed in any one of the preceding claims, further comprising an interface configured to receive an input indicating the number of users.

13. The display apparatus as claimed in any one of the preceding claims, wherein the controller is configured to control the display to display a message on a screen inquiring whether or not to use a function for adjusting a viewing circumstance of the display apparatus according to the number of users.

14. The display apparatus as claimed in any one of the preceding claims, further comprising a detector configured to detect the number of users.

15. A display method of a display apparatus comprising:
displaying an image; and
controlling a display of the display apparatus that is displaying the image to be bent to a preset angle according to the number of users of the display apparatus.
